Europäisches Patentamt

European Patent Office

Office européen des brevets

(19)

(11) Publication number: **0 269 093 B1**

(12) **EUROPEAN PATENT SPECIFICATION**

(45) Date of publication of patent specification: **04.09.91**   (51) Int. Cl.⁵: **F02B 23/06**

(21) Application number: **87117413.2**

(22) Date of filing: **25.11.87**

(54) **Combustion chamber for internal combustion engines.**

(30) Priority: **25.11.86 JP 278766/86**

(43) Date of publication of application:
**01.06.88 Bulletin 88/22**

(45) Publication of the grant of the patent:
**04.09.91 Bulletin 91/36**

(84) Designated Contracting States:
**DE GB**

(56) References cited:
**EP-A- 0 105 933      FR-A- 2 127 670**
**GB-A- 585 801        GB-A- 2 016 079**
**GB-A- 2 066 896       GB-A- 2 097 472**
**US-A- 3 945 351**

(73) Proprietor: **Isuzu Motors Limited**
**10-go, 22-ban, 6-chome, Minami-Ohi**
**Shinagawa-ku**
**Tokyo(JP)**

(72) Inventor: **Yanagisawa, Naoki Fujisawa Factory**
**Isuzu Motors Limited 8, Tsuchidana**
**Fujisawa-shi Kanagawa(JP)**
Inventor: **Sato, Yoshihiko Fujisawa Factory**
**Isuzu Motors Limited 8, Tsuchidana**
**Fujisawa-shi Kanagawa(JP)**
Inventor: **Sakurai, Noriyuki Fujisawa Factory**
**Isuzu Motors Limited 8, Tsuchidana**
**Fujisawa-shi Kanagawa(JP)**

(74) Representative: **Schaumburg, Thoenes & En-**
**glaender**
**Mauerkircherstrasse 31 Postfach 86 07 48**
**W-8000 München 86(DE)**

## Description

The present invention relates to a combustion chamber for internal combustion chamber engines that are fueled by atomized fuel directly supplied into the combustion chamber, particularly such combustion chambers in which air flow is created and the atomized fuel is well mixed with the air flow whereby achieving an improvement in air utilization rate, decrease of exhaust unburnt matters, and decrease in smoke index or density, as well as obtaining a desired power output. The prior art nearest to this invention is given by FR-A-2 127 670.

As a combustion chamber of internal combustion engines of the type that has its fuel atomized and directly fed into the combustion chamber which is formed as a compartment within the piston, such as the diesel engines, the combustion chamber of FR-A-2 127 670 or the toroidal type combustion chamber shown in Fig. 8 is generally provided.

As shown in the figure, in the toroidal combustion chamber b that is formed as a recess in the top part of the piston a, there is disposed a fuel injection nozzle c having generally four nozzle holes d aligned in a circle facing said combustion chamber b (Japanese Utility Model Lay Open Print No. 193,013/ 1983). Each nozzle hole d of the fuel injection nozzle c is so designed as to make the flight length of its fuel mist e approximately the same as of the other nozzle holes, so that a good fuel distribution will result.

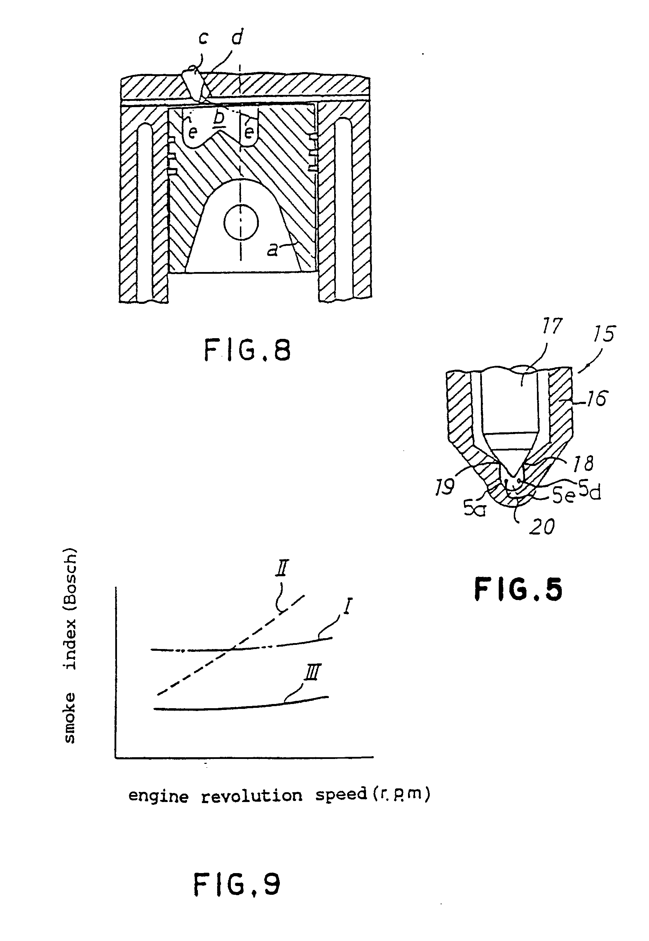

However, investigation of the performance of such a combustion chamber described above in terms of the smoke index (Bosch number) with regard to the engine revolution speed has revealed the curves illustrated in Fig. 9. Namely, as shown in the figure by the double-dot line I, the smoke indices of a fuel injection nozzle having four nozzle holes are high or its smoke performance is unfavourable. This is because mixing of the atomized fuel and air in the combustion chamber is unsatisfactory.

Thereupon, one more nozzle hole was added, and these five nozzle holes were distributed facing the periphery of the combustion chamber. The result which is represented by the broken line II was that even though the smoke indices were lower for lower engine revolution speeds, they became higher than in the case of four nozzle holes beyond a certain revolution speed.

This is because the increase in the number of the nozzle holes leads to a decrease in the peripheral intervals between them, and although this arrangement improves dispersion of the fuel mist while the engine revolution speed is low, the generated swirl becomes more liable to carry the fuel sprays over and toward the center of the combustion chamber as the revolution speed is raised, thereby affecting the favourable distribution of the fuel mist.

That is to say, such effect as mentioned above is equivalent to having an overswirl in the combustion chamber, and since overswirling tends to concentrate the fuel-air mixture in the center axis portion thereof, it decreases the air utilization rate and causes generation of HC and smoke, so that it is unfavourable for the combustion.

GB-A-2 066 896 describes a combustion chamber into which the fuel is injected in the form of a conical shell which is so weak that an overswirl does not occur. This principle cannot solve the problem of high smoke indices at heavy load condition caused by an increase of the number of nozzle holes.

It is an object of this invention to provide a combustion chamber for internal combustion engines that optimizes the air flow for combustion, distributes the gas mixture uniformly in the air flow under all engine load conditions and thereby ensures favourable combustion performances. Further, such combustion chamber should be capable of suppressing the generation of unburnt matters such as HC, $NO_x$ and smoke by increasing the air utilization rate.

This object is solved by a combustion chamber having the features of claim 1. Advantageous further developments of the invention are described in the subclaims.

The invention will be further described with reference to the annexed drawing in which

Figure 1    is a vertical cross section of the combustion chamber of this invention, showing the first preferred embodiment thereof;

Figure 2    is a horizontal cross section substantially taken along the II-II arrow line in Fig. 1;

Figure 3    is a vertical cross section of the combustion chamber, showing a second preferred embodiment;

Figure 4    is a horizontal cross section substantially taken along the IV-IV arrow line in Fig. 3;

Figure 5    is a detailed partial view of the fuel injection nozzle means;

Figure 6    is a top plan view of another combustion chamber having a pentagonal cross section and being provided with a fuel injection nozzle means having five nozzle holes;

Figure 7    is a top plan view of yet another combustion chamber having a hexagonal cross section and being provided with a fuel injection nozzle means having six nozzle holes;

Figure 8 is a vertical section of a combustion chamber representing the prior art; and

Figure 9 is a diagram showing the relationship between smoke density and engine revolution speed.

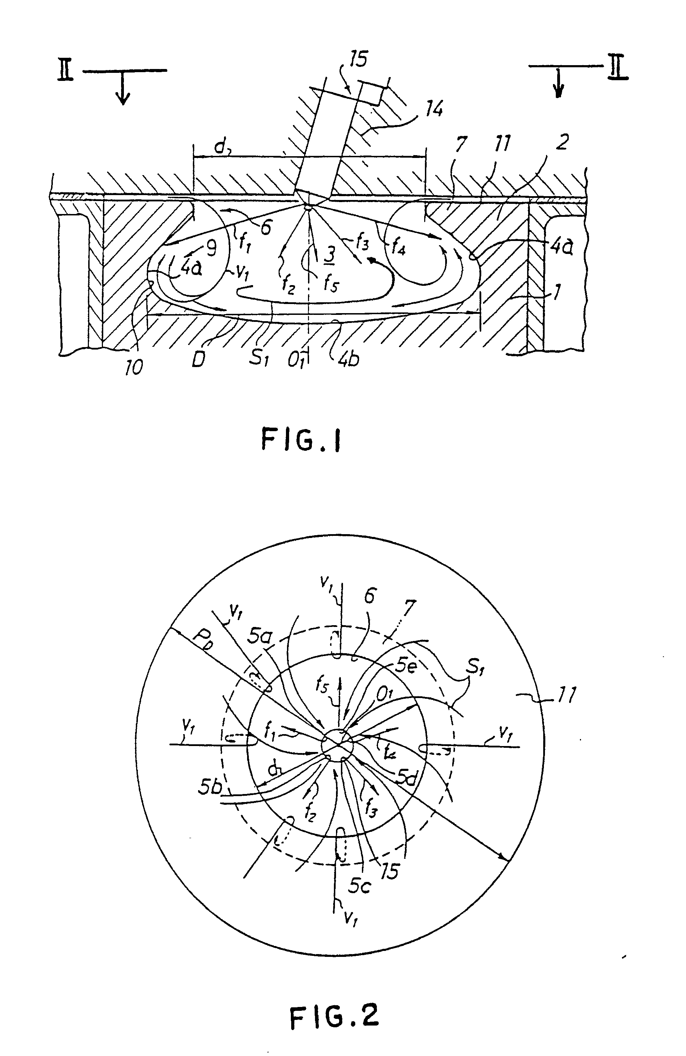

In Fig. 1 a piston is shown in the top part 2 of which there is formed a combustion chamber 3 recessed in the axial direction of the piston 1 with the top surface 11 thereof as a plane of reference.

Here, the manner of forming said combustion chamber 3 is such that its cavity diameter progressively enlarges in the direction of the center axis so that the vertical cross section is approximately trapezoidal while each horizontal cross section is circular.

Now it is to be remembered that the object of this invention resides in producing an optimal air flow in the combustion chamber by controlling the intensities and the directions of the swirl flow and the squish flow generated therein, and in letting the combustion so proceed as to minimize the generation of unburnt exhaust matters (such as $NO_x$, smoke, and HC) by thouroughly mixing the injected fuel mist with aforesaid optimized air flow so that the resultant fuel-air mixture will be approximately uniformly distributed in the combustion chamber.

For the purpose set forth above the construction of the combustion chamber 3 and the arrangement of a fuel injection nozzle means 15 is the following.

The combustion chamber 3 having a circular cross section is formed in the piston top part 11 recessed in the direction of the center axis. In producing a swirl flow $S_1$ therein (Fig. 2), the fact that its intensity is determined by the diameter $P_D$ of the piston 1 and the largest cavity diameter D of the combustion chamber 3 is taken into account. That is to say, to ensure the intensity of the swirl flow $S_1$ to be sufficiently strong as to be able to improve the combustion performance in the whole engine speed range, the $D/P_D$ ratio is:

$$0,45 \leqq D/P_D \leqq 0,65 \qquad (1)$$

Next, as a consequence of forming the combustion chamber 3 with its cavity diameter progressively enlarged in the direction of the recess and of the center axis, a lip 7 is formed in the entrance opening 6 of the combustion chamber 3 along its periphery extending radially inward to an appropriate length and into the direction of recess. The diameter d of the entrance opening 6 thus formed by the lip 7 exerts a great influence on the intensity of the squish flow $V_1$ to be forced into the combustion chamber 3 and the output of the engine, such that the smaller the aperture diameter d, namely towards closure of the entrance opening 6, the stronger becomes the intensity of the squish flow $V_1$, but, on the other hand, the greater becomes the pumping work the piston has to perform, which results in an increase of losses.

To obtain a squish flow $V_1$ of a desired intensity it is necessary to set the aperture diameter d to a value that minimizes the pumping loss of the engine, then, for the diameter thus determined, to enhance a vertical swirl of the squish flow $V_1$ in the combustion chamber 3. Here, care should be exercised not to make the swirl diameter of the squish flow $V_1$ too large, lest the squish flow $V_1$ should overflow the combustion chamber 3, namely out of the cylinder (not shown), or not to make it excessively small, lest the squish flow $V_1$ should become too fast, carry the fuel in liquid form to adhere on the side wall 4a close to the bottom 4b of the combustion chamber 3.

Moreover, since the directions of the swirl flow $S_1$ and of the squish flow $V_1$ are opposite to each other at their upstream sides, fluid friction is generated over the whole range of the revolution speed. This has been confirmed by the fact that the swirl flow is attenuated by the squish flow $V_1$.

By taking advantage of this phenomenon, a squish flow $V_1$ of such an intensity can be obtained that overswirling or squish overflow as well as an adherence of fuel can be avoided. It is known that the intensity of the squish flow $V_1$ is determined by the aperture diameter d of the entrance opening 6 and the greatest cavity diameter D of the combustion chamber 3. Furthermore, the most preferable ratio d/D is given by the following equation:

$$0,6 \leqq d/D \leqq 0,8 \qquad (2)$$

Owing to the construction described above, a swirl flow $S_1$ and a squish flow $V_1$ of optimum intensity are formed in the combustion chamber 3, thereby producing an air flow that is favourable for combustion.

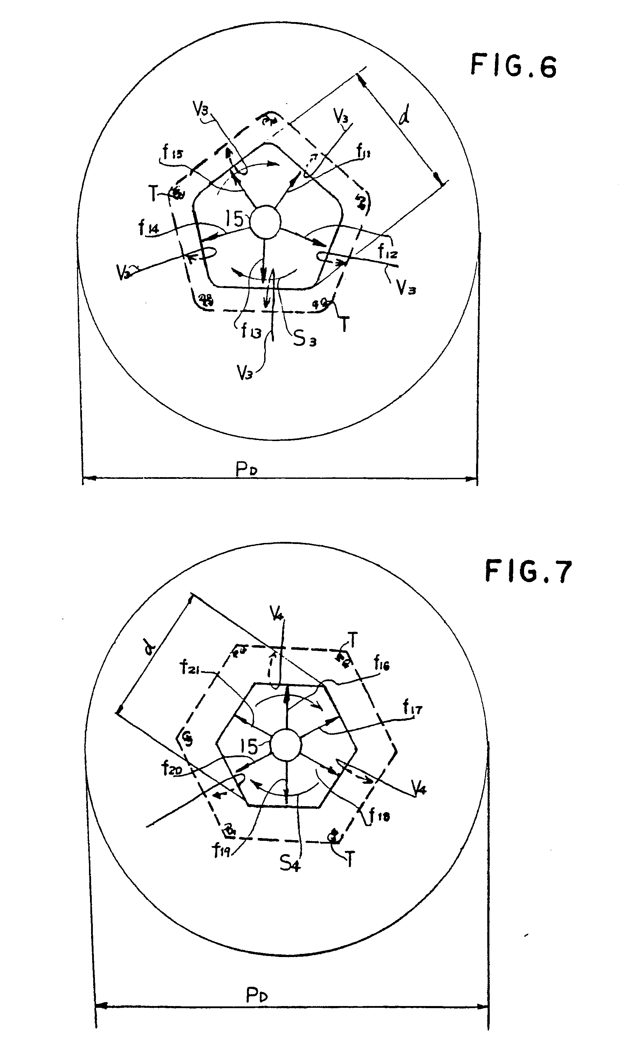

Next, to disclose the design of the fuel injection nozzle means 15 and the disposition thereof with respect to the combustion chamber 3, reference is made to Fig. 5. As illustrated therein, a cylindrical nozzle body 16 accomodates a needle valve 17 which can be shifted in the axial direction thereof while in the internal tip portion of the nozzle body 16 there is provided a valve seat 19 on which the tip 18 of the needle valve 17 is sealed.

In that part of the nozzle body 16 between the valve seat 19 and the tip there is formed a fuel injection chamber 20 in such a manner that it will be connected to a fuel passage (not shown) provided within the nozzle body 16 as and when the needle valve 17 is lifted from the valve seat 19. Moreover, in that part of the nozzle body 16 which forms the fuel injection chamber 20, there are formed five nozzle holes 5a, 5b, 5c, 5d and 5e in circumferential distribution, each extending from the chamber 20 through the nozzle body 16.

The fuel injection nozzle means 15 is disposed within the cylinder head 14 and in the vicinity of the center axis $O_1$ of the combustion chamber 3, facing the combustion chamber 3. Here, the nozzle holes 5a through 5e are directed, when the piston 1 has almost reached the top dead center, so as to face corresponding portions of the side wall 4a so that their fuel sprays divide the combustion chamber 3 circumferentially into five approximately equal sections.

Now the function and the advantages of this combustion chamber will be described. As shown in Figs. 1 and 2, the swirling flow of air that is fed from the swirl port (not shown) to the cylinder (not shown) enters the combustion chamber 3 of piston 1 to form the swirl flow $S_1$ therein. This swirl flow $S_1$ moves in downward direction from the entrance opening 6 towards the center axis $O_1$ of the combustion chamber 3. It should be noted that owing to the fluid inertia the swirl flow $S_1$ is sustained even when the piston 1 is in the compression stroke.

When the piston 1 approaches the end of its compression stroke the squish flow $V_1$ formed by the compression action of the piston 1 is forced into the compression chamber 3. This squish flow $V_1$ is dispersed on collision with the bottom wall 4b of the combustion chamber 3, and a part of thus dispersed squish flow $V_1$ flows toward the center axis $O_1$ of the combustion chamber 3 due to the centripetal force. The remaining part of the dispersed squish flow $V_1$ is turned back in upward direction by the curved surface 10 that smoothly connects the bottom wall 4b and the inner wall 4a in vertical direction, then turned back again downwardly toward the bottom wall 4b by the lip 7 that constitutes the entrance opening 6.

Since that squish flow $V_1$ which is directed from the entrance opening 6 downward to the bottom wall 4b is opposite to the swirl flow $S_1$ which has been created in the combustion chamber 3, fluid friction is generated between the swirl flow $S_1$ and the squish flow $V_1$. This fluid friction prevents the swirl flow $S_1$ from becoming overswirled even when the swirl flow $S_1$ is intensified by an increase of engine revolution speed.

At the same time, since the intensity and the swirling diameter of the squish flow $V_1$ can be optimized, not only a fuel stagnation at the bottom of the combustion chamber 3 which would cause generation of HC can be suppressed, but also the air utilization rate will be improved. In this way, an air flow that improves the combustion performance will be created in the combustion chamber 3.

Before the piston 1 reaches its final stage in the compression stroke, the needle valve 17 is lifted in the nozzle body 16 in accordance with the amount of fuel to be supplied which opens the nozzle holes 5a through 5e to inject fuel mist toward the inner side wall 4a of the combustion chamber which latter is circumferentially divided into five approximately equal pie-like sections. Since these fuel sprays f1, f2, f3, f4 and f5 have the desired penetration power and the desired dispersion, they undergo a partial evaporation during the flight from the nozzle holes by the heat of the compressed air and the heat from the wall. As some portion of the remaining fuel encounters squish flow $V_1$ that flows swirling vertically, the evaporation will be accelerated.

The remainder of the sprays f1 through f5 thinly adheres at the inner wall 4a where it is evaporated by the heat of the inner wall 4a and of the compressed air, and forms a fuel film of uniform thickness (not shown) to be separated away by the squish flow $V_1$.

Here, that part of the sprays f1 through f5 which has been evaporated on its flight is further divided into a portion which is mixed with air as it is carried by the swirl flow $S_1$ over and toward the center axis $O_1$ of the combustion chamber 3 and into another portion which is entrained in the squish flow $V_1$ to be mixed with the air near the side wall 4a. In the meantime, the fuel vapor resulting from said fuel film is entrained in the squish flow V, remaining therewith. Thus, because the space that the squish flow $V_1$ mainly covers or the space near the side wall 4a is smaller than the space or the central area where the swirl $S_1$ dominates, a relatively fuel-rich zone is created in the former space.

Therefore, ignition takes place near the inner side wall 4a, whereby a comparatively fast combustion is achieved, resulting in an increase in heat generation rate and a decrease in HC generation. Since the flame and its promote energy evaporation of the fuel film so that it gradually participates in the combustion and since the flame thus generated propagates into the gas mixture present in the central area of the combustion chamber 3, combustion proceeds in a generally diffused manner. Owing to this kind of combustion, the heat generation rate is lowered as a whole, enabling to greatly decrease the formation of $NO_x$, smoke and HC. Since this lowering of the heat generation rate leads to shortening of the ignition delay, a rapid increase in the cylinder pressure is prevented and a decrease of combustion noise is effectively attained.

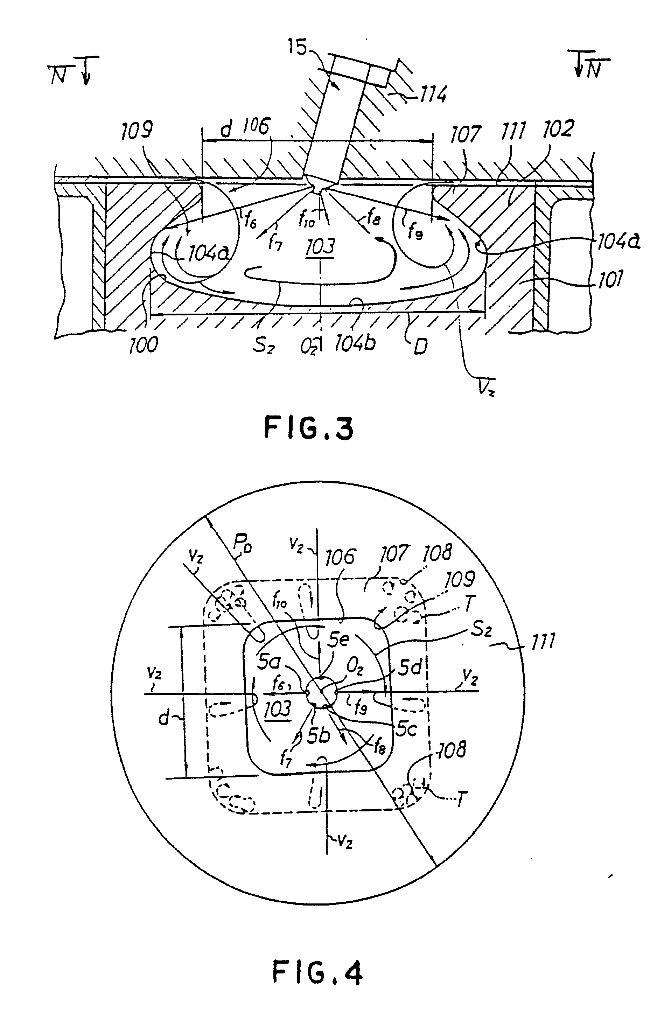

In Fig. 3 a piston 101 is shown in the top 102 of which there is formed a combustion chamber 103 defined by a recess in the axial direction of the piston 101.

The combustion chamber 103 is enlarged in its horizontal cross section along the axis of the combustion chamber 103 so that a lip portion 107 is formed along the opening 106 of the combustion chamber 103, extending radially inward.

The horizontal cross sections of the combustion chamber 103, taken at right angles to the center axis direction of the piston 101, are of square shape as shown in Fig. 4 and two adjacent circumferential corners are mutually joined over a curved surface 108 of an appropriate curvature. In the present embodiment, these four corners act as depressions 109 that lead the squish flow $V_2$ into themselves, whereby turbulences T are generated.

The side wall 104a and the bottom wall 104b of the combustion chamber 103 are mutually joined over a curved surface 100 of an appropriate curvature, and the bottom wall 104b is downwardly curved so that its center corresponds to the deepest point of the combustion chamber 103.

Now, the construction of the combustion chamber 103 and the manner of arrangement of a fuel injection means 115 will be described.

As a consequence of forming a combustion chamber 103 by recessing the piston top portion 111 in the direction of the center axis, a swirl flow $S_2$ will be generated therein, and the intensity of this swirl flow $S_2$ is determined by the diameter $P_D$ of the piston 101 and the largest cavity diameter D of the combustion chamber 103. Since the intensity of the swirl flow $S_1$ has to be strong enough to be able to improve the combustion characteristic for all running conditions of the engine, the $D/P_D$ ratio should be in the range given by the following equation:

$$0,45 \leq D/P_D \leq 0,65 \qquad (3)$$

As a consequence of forming the combustion chamber 103 with its cavity diameter progressively enlarged in the direction of the recess and of the axis, the lip portion 107 is left over in the inlet opening 106 of the combustion chamber 103 along its periphery extending radially with an appropriate magnitude. The size of the opening 106 thus formed by the lip 107, namely the aperture diameter d, exerts a great influence on the intensity of the squish flow $V_2$ to be forced into the combustion chamber 103 and the output of the engine so that the smaller the aperture diameter d, namely by closing the inlet opening 106 the more, the greater becomes the intensity of the squish flow $V_2$, but, on the other hand, the greater becomes the pumping effect or the resistance against the piston 101.

To obtain a squish flow $V_2$ of the desired intensity, it is necessary to set the aperture diameter d to a value that minimizes the pumping loss of the engine and to provide a recess thus determined so as to let the squish flow $V_2$ swirl vertically in the combustion chamber 103. Here, care should be taken not to make the swirl diameter of the squish flow $V_2$ excessively large, lest the squish flow $V_2$ overflows the combustion chamber 103, namely out of the cylinder (not shown), or not to make it excessively small, lest the squish flow $V_2$, having become too fast, carries the fuel as a liquid to deposit on the bottom 104b near the side wall 104a.

Moreover, since the directions of the swirl flow $S_2$ and the squish flow $V_2$ are opposite to each other - a fact which has been confirmed by observation even for the combustion chamber 103 of square cross section in which the swirl flow $S_2$ is attenuated by the squish flow $V_2$ - , fluid friction is generated over the whole range of revolution speeds.

By taking advantage of this phenomenon a squish flow $V_2$ of an intensity that will not produce overswirling, or let the squish flow $V_2$ overflow, nor generate a stagnation of fuel can be obtained. In the present embodiment the strength of the squish flow $V_2$ is also determined by the aperture diameter d of the inlet opening 106 and the greatest cavity diameter D of the combustion chamber 103. To obtain an adequate $V_2$, the ratio d/D should be in a range given by the following equation.

$$0,6 \leq d/D \leq 0,8 \qquad (4)$$

Owing to the construction described above, a swirl flow $S_2$ and a squish flow $V_2$, both of an optimum intensity, are formed in the combustion chamber 103, thereby producing an air flow that is favourable for combustion.

The design of the fuel injection nozzle means and its arrangement with respect to the combustion chamber 103 will now be disclosed. Since the fuel injection means 15 is to be constructed as shown in Fig. 5, it will not be explained in detail. It is provided in the cylinder head 114 so as to face the combustion chamber 103 in the vicinity of its center axis $O_2$.

The nozzle holes 5a through 5b are so directed that when the piston 101 has moved to near its upper dead point position, they face corresponding parts of the side wall 104a that is circumferentially divided into five approximately equal sections.

To explain the functioning and the advantages of a combustion chamber as shown in figures 3 and 4, a swirling flow of air (created by a swirl port not shown) enters the combustion chamber 103 and becomes the swirl flow $S_2$ therein after it has repeatedly collided with the circumferential inner wall 104a and uniformized. The swirl flow $S_2$ moves relatively closer to the side wall 104a.

The squish flow $V_2$, which is created when the piston 101 approaches the end of its compression stroke, is forced into the compression chamber 103 throttled by the lip 107, toward the bottom wall 104b. Due to the presence of the swirl flow $S_2$, however, this squish flow $V_2$ is forced to vertically swirl into a radially outer zone with respect to the central zone of the swirl flow $S_2$.

The squish flow $V_2$ that has reached the bottom wall 104b of the combustion chamber 103 is dispersed thereat, and a portion of the dispersed squish flow $V_2$ flows toward the chamber's center along the curvature of the bottom wall 104b, while the remaining part of the squish flow $V_2$ is turned back upwardly by the curved surface 104a toward the top surface 111, where it will be turned back again downwardly toward the bottom wall 104b by the lip 107.

The squish flow $V_2$ that has been forced into the depressions 109 which are formed by the four corners of the combustion chamber 103 agitates the air therein and generates the turbulences T.

Since the intensity of a squish flow $V_2$ is unequivocally determined by an area that is obtained by subtracting the area of the inlet opening 106 from the area of the top surface 111 of the piston 101, the intensity of that squish flow $V_2$ which has been forced into the combustion chamber 103 has a distribution profile in which the intensity is greatest at the center of each side of the square inlet opening 106 and becomes progressively weaker toward the depressions 109. On the other hand, however, the zone over which the swirl flow $S_2$ exerts influence becomes smaller toward the depressions 109. Therefore, a squish flow $V_2$ that has the desired intensity can be surely created and maintained.

Since that squish flow $V_2$ which is directed from the inlet opening 106 to the bottom wall 104b is of opposite direction with regard to the swirl flow $S_2$ which has been created in the combustion chamber 103, fluid friction is generated between the swirl flow $S_2$ and the squish flow $V_2$. This fluid friction has the effect that it prevents the swirl flow $S_2$ from becoming overswirled even when the engine revolution speed is raised. Since the intensity and the swirling diameter of the squish flow $V_2$ can be optimized at the same time, not only fuel stagnation can be suppressed but also the air utilization rate can be improved.

So, a flow of air can be created and maintained in the combustion chamber 103 in such a manner as to improve the combustion.

As may be seen from Fig. 5, on the other hand, before the piston 1 reaches its final stage of the compression stroke, the needle valve 17 is lifted in the nozzle body 16 in accordance with the amount of fuel fed thereinto, by which action the nozzle holes 5a through 5e are opened to inject fuel mist toward those parts of the inner wall 104a which circumferentially divide the inner wall 104a into five approximately equal sections. Since the fuel thus injected forms sprays f6 through f10, each having a desired penetration and a desired spread, it is subjected to partial evaporation during the flight of these sprays f6 through f10 by the heat of the compressed air and the heat from the wall. As a portion of the remaining fuel encounters squish flow $V_2$ that flows in vertical direction, the evaporation will be accelerated.

The last remainder of the sprays f6 through f10 thinly adheres onto the inner wall 104a, where it is evaporated by the heat of the inner wall 104a and that of the compressed air, and forms a fuel film of uniform thickness (not shown) which will be removed by the squish flow $V_2$.

Here, that part of the sprays f6 through f10 which has been evaporated on its flight is further divided into a part which is mixed with air as it is carried by the swirl flow $S_2$ over and toward the center axis $O_2$ of the combustion chamber 103 and a part which is entrained in the squish flow $V_2$ to be mixed with the air near the inner wall 104a. Further, the aforementioned fuel vapor that the fuel film produces is entrained in the squish flow $V_2$, remaining therewith. Thus, because the space near the side wall where the squish flow $V_2$ occurs is smaller than the space around the center axis $O_2$ where the swirl $S_2$ occurs, a fuel-rich zone is created on the side of and along the inner wall 104a.

Therefore, ignition takes place on the side of the inner wall 104a, whereby a comparatively fast combustion is achieved, resulting in a decrease of HC. The flame and the flame energy thereby generated promote evaporation of the aforesaid fuel film so that it gradually participates in the combustion, and at the same time the flame thus generated propagates into the gas mixture preset on the center axis $O_2$ side of the combustion chamber 103.

As described heretofore, a construction of the combustion chamber 103 with a smooth curved surface to a part of the inner walls or with a depression or an extension thereto enables an even distribution of the combustion air supplied to the combustion chamber 103 in the form of the swirl flow $S_2$ that swirls around near the inner walls. As a result thereof it is prevented that most of the squish flow $V_2$ is carried away toward the chamber's side wall 104a by the swirl flow $S_2$. By this, not only the squish flow $V_2$ is strengthened but also the turbulences T are carried by the depressions 109. Thus, the agitation and distribution of fuel with air is greatly promoted in the combustion chamber 103, and a stabilization of combustion can be achieved.

Since a turbulence T is created in each depression 109, the fuel evaporated and trapped in the depression 109 is readily mixed with air. Since the outflow of the gas mixture from a depression 109 as well as the inflow of the swirl flow $S_2$ thereinto are both difficult because of the fluid inertia of the swirl flow $S_2$, the aforesaid depressions 109 will have the effect of zones in which a fuel-rich mixture will be generated.

It is quite feasible to design the horizontal cross section to be pentagonal as shown in Fig. 6, or hexagonal as shown in Fig. 7. In these embodiments, each corner constitutes a depression and is rounded by a curved surface of an appropriate curvature as in the second preferred embodiment discussed above. Since the number of depressions increases with an increase of the sides, the situation approaches that of the combustion chamber 3 with a circular horizontal cross section, which, has been explained with respect to the first preferred embodiment.

Therefore, squish flows $V_3$ and $V_4$ may be formed circumferentially having comparatively more uniform intensity than in the combustion chamber 103 of square horizontal cross section discussed above, because the distances between the inner side walls and that between the lip portions are shorter. It is of advantage that the degree of uniformity of the intensity of the squish flow in a polygonal chamber can be determined by the number of its corners. The number of corners should be selected in accordance with the intensity of the swirl flow $S_2$.

In figures 6 and 7, f11 through f21 designate fuel sprays spouted into the combustion chambers 203 and 303, respectively.

As disclosed heretofore, a dispersed combustion has been achieved in the first and the second preferred embodiments by improving the flow of air within the combustion chamber, thereby improving the distribution of the fuel-air mixture therein. As a result thereof, a great reduction of smoke index over the whole speed range has been attained as shown by the solid line III in Fig. 7.

In the foregoing embodiments, the ratio of $D/P_D$ is set to a value between 0,45 and 0,65, inclusive. However, the ratio of $D/P_D$ is not restricted within the above range. Namely, the designation of $D/P_D$ to a value more than 0.65 or less than 0,45 belongs to the scope of this invention. More specifically, when $D/P_D$ is more than 0,65, the speed of the swirl flow within the combustion chamber will be low or its intensity weak, which leads to an increase of the number of the nozzle holes in order to assure the preferable mixing of fuel and air, which further leads to a reduction of the nozzle hole diameter. This reduction results in a deterioration of the penetration power of fuel so that the fuel mists cannot reach the chamber's side wall, whereby no favourable combustion is possible. However, this difficulty can be overcome by increasing the fuel injection pressure. On the other hand, when $D/P_D$ is less than 0,45, the number of nozzle holes should be decreased, and in this case a sufficient fuel atomization will be difficult due to an undue penetration power of fuel so that a favourable combustion is difficult under light load or low speed condition of the engine. But, this drawback can be eliminated by decreasing the fuel injection pressure in order to find the optimum value.

## Claims

1. A combustion chamber for an internal combustion engine of a type comprising: a combustion chamber (3) formed in the top part (2) of a piston (1) with the chamber top opened and recessed downwardly in the direction of the center axis ($O_1$) of the piston (1), the combustion chamber (3) having a side wall (4a) the distance of which to the facing side wall (4a) is initially progressively increased to meet a curved surface which connects the side wall and the bottom wall so that a squish flow ($V_1$) is introduced into the combustion chamber (3) at an air intake stroke of the piston (1) and a swirl flow ($S_1$) is produced in the combustion chamber (4), the strength of the swirl flow ($S_1$) being increased with increasing load of the engine; and a fuel injection nozzle means (15) having a plurality of nozzle holes (5a, 5b, 5c, 5d) and being provided approximately on the center axis ($O_1$) of the combustion chamber (3) for supplying fuel toward the inner side wall (4a) **characterized** in that the fuel injection nozzle means (15) has five nozzle holes (5a, 5b, 5c, 5d, 5e) so that the combustion chamber (3) is circumferentially divided into five approximately equal sections by the fuel sprays ($S_1$), and the combustion chamber (3) has a bottom wall (4b) defined by a substantially concave surface so that the squish flow ($V_1$) is divided into two flows, one toward the adjacent part of the side wall (4a) of the combustion chamber (3) and the other one toward the center axis ($O_1$).

2. A combustion chamber according to claim 1, wherein said combustion chamber (3) is so constructed that its cross sections, taken at right angles to the center axis ($O_1$) thereof, are circular in shape, the bottom wall (4b) and the inner wall (4a) are connected by a curved surface that reverses the flow direction of that part of the squish flow forced along the side wall (4a) whereas the remainder of the air is guided toward the center axis ($O_1$) of said

combustion chamber (3) by the bottom wall (4b); and

said fuel injection nozzle means (15) has nozzle holes (5) for spouting atomized fuel toward the inner side wall (4a), the fuel sprays (f) dividing the combustion chamber (3) into five approximately equal sections and being directed toward said side wall (4a) in the vicinity of the joints of said connecting curved surfaces.

3. A combustion chamber according to claim 1, wherein said combustion chamber (103) is so constructed that its cross sections, taken at right angles to the center axis (O$_2$) thereof, are square in shape and the bottom wall (104b) and the inner wall (104a) are connected by a curved surface that reverses the flow direction of that part of the squish flow forced along the side wall (104a) whereas the remainder of the air is guided toward the center axis (O$_2$) of said combustion chamber (103) by the bottom wall (104b), with the two adjacent side walls (104a) being connected to each other by another curved surface that produces turbulence (T) therein; and

said fuel injection nozzle means (15) has nozzle holes (5) that atomize and direct the fuel toward the side walls (104a) in the vicinity of the joints of said connecting curved surfaces (108), the combustion chamber (103) being divided into approximately five sections by the fuel sprays (f).

4. A combustion chamber according to anyone of claims 1, 2 or 3, wherein

said combustion chamber (3, 103) is so constructed as to satisfy the following two formulas:

$$0,45 \leqq D/P_D \leqq 0,65, \text{ and}$$
$$0,6 \leqq d/D \leqq 0,8,$$

where P$_D$ is the diameter of the piston (1, 101), D is the greatest distance between two facing side walls (4a, 104a), and d is the distance between two facing side walls (4a, 104a) at the inlet opening (6, 106) of the combustion chamber (3, 103).

**Revendications**

1. Chambre de combustion pour un moteur à combustion interne d'un type comportant : une chambre de combustion (3) formée dans la partie supérieure (2) d'un piston (1), le haut de la chambre étant ouvert et creusé vers le bas dans la direction de l'axe central (O$_1$) du piston

(1), la chambre de combustion (3) ayant une paroi latérale (4a) dont la distance à la paroi latérale opposée (4a) est initialement augmentée progressivement pour rejoindre une surface incurvée qui relie la paroi latérale à la paroi de fond afin qu'un écoulement giclant (V$_1$) soit introduit dans la chambre (3) de combustion lors d'une course d'admission d'air du piston (1) et qu'un écoulement tourbillonnaire (S$_1$) soit produit dans la chambre de combustion (3), la force de l'écoulement tourbillonnaire (S$_1$) étant augmentée avec l'augmentation de la charge du moteur ; et un moyen (15) d'injection de carburant présentant plusieurs trous (5a, 5b, 5c, 5d) d'injecteur et étant prévus approximativement sur l'axe central (O$_1$) de la chambre (3) de combustion pour diriger du carburant vers la paroi latérale intérieure (4a), caractérisée en ce que le moyen (15) d'injection de carburant présente cinq trous (5a, 5b, 5c, 5d, 5e) d'injecteur afin que la chambre (3) de combustion soit divisée circonférentiellement en cinq sections approximativement égales par les pulvérisations (f) de carburant, et la chambre (3) de combustion comporte une paroi de fond (4b) définie par une surface sensiblement concave afin que l'écoulement giclant (V$_1$) soit divisé en deux écoulements, l'un vers la partie adjacente de la paroi latérale (4a) de la chambre (3) de combustion et l'autre vers l'axe central (O$_1$).

2. Chambre de combustion selon la revendication 1, dans laquelle ladite chambre (3) de combustion est construite de façon que ses sections transversales, considérées perpendiculairement à son axe central (O$_1$), soient de forme circulaire, que la paroi de fond (4b) et la paroi intérieure (4a) soient reliées par une surface incurvée qui inverse le sens d'écoulement de la partie de l'écoulement giclant (V$_1$) forcée le long de la paroi latérale (4a), tandis que la partie restante de l'air est guidée vers l'axe central (O$_1$) de ladite chambre (3) de combustion par la paroi de fond (4b) ; et

ledit moyen (15) d'injection de carburant présente des trous (5) d'injecteur pour projeter du carburant atomisé vers la paroi latérale intérieure (4a), les pulvérisations (f) de carburant divisant la chambre (3) de combustion en cinq sections approximativement égales et étant dirigées vers ladite paroi latérale (4a) au voisinage des jonctions desdites surfaces incurvées de liaison.

3. Chambre de combustion selon la revendication 1, dans laquelle ladite chambre (103) de combustion est construite de manière que ses sections transversales, considérées perpendiculairement à son axe central ($O_2$), soient de forme carrée et que la paroi de fond (104b) et la paroi intérieure (104a) soient reliées par une surface incurvée qui inverse le sens d'écoulement de la partie de l'écouiement giclant ($V_2$) forcée le long de la paroi latérale (104a), tandis que la partie restante de l'air est guidée vers l'axe central ($O_2$) de ladite chambre de combustion (103) par la paroi de fond (104b), les deux parois latérales adjacentes (104a) étant reliées entre elles par une autre surface incurvée qui y produit une turbulence (T) ; et

ledit moyen (15) d'injection de carburant présente des trous (5) d'injecteur qui atomisent et dirigent le carburant vers les parois latérales (104a) au voisinage des jonctions desdites surfaces incurvées (108) de liaison, la chambre de combustion (103) étant divisée en approximativement cinq sections par les pulvérisations (f) de carburant.

4. Chambre de combustion selon l'un quelconque des revendications 1,2 ou 3, dans laquelle ladite chambre (3, 103) de combustion est construite de manière à satisfaire les deux formules suivantes :

$$0,45 \leq D/P_D \leq 0\ 65, \text{ et}$$
$$0,6 \leq d/D \leq 0,8,$$

où $P_D$ est le diamètre du piston (1, 101), D est la plus - grande distance entre deux parois latérales opposées (4a, 104a), et d est la distance entre deux parois latérales opposées (4a, 104a) à l'ouverture d'entrée (6, 106) de la chambre (3, 103) de combustion.

**Patentansprüche**

1. Verbrennungskammer für eine Brennkraftmaschine, die enthält: Eine Verbrennungskammer (3) im oberen Teil (2) eines Kolbens (1), deren Oberseite offen und nach unten in Richtung der Mittelachse ($O_1$) des Kolbens (1) vertieft ist und die eine Seitenwand (4a) hat, deren Abstand zu der gegenüberliegenden Seitenwand (4a) zunächst progressiv zunimmt, um in eine gekrümmte Fläche überzugehen, die die Seitenwand und die Bodenwand verbindet, so daß ein Quetschspaltfluß ($V_1$) in die Verbrennungskammer (3) bei einem Ansaughub des Kolbens (1) eingeführt und ein Wirbelfluß ($S_1$) in der Verbrennungskammer (3) erzeugt wird, dessen Stärke mit zunehmender Maschinenbelastung zunimmt; und eine Kraftstoffeinspritzdüsenanordnung (15) mit mehreren Düsenöffnungen (5a, 5b, 5c, 5d) etwa auf der Mittelachse ($O_1$)

der Verbrennungskammer (3) zum Zuführen von Kraftstoff zur inneren Seitenwand (4a), dadurch **gekennzeichnet,** daß die Kraftstoffeinspritzdüsenanordnung (15) fünf Düsenöffnungen (5a, 5b, 5c, 5d, 5e) hat, so daß die Verbrennungskammer (3) durch die Kraftstoffstrahlen (f) in Umfangsrichtung in fünf etwa gleiche Abschnitte unterteilt wird, und daß die Verbrennungskammer (3) eine durch eine im wesentlichen konkave Fläche gebildete Bodenwand (46) hat, ist, so daß der Quetschspaltfluß ($V_1$) in zwei Flüsse aufgeteilt wird, von denen einer zum benachbarten Teil der Seitenwand (4a) der Verbrennungskammer (3) und der andere zur Mittelachse ($O_1$) gerichtet ist.

2. Verbrennungskammer nach Anspruch 1, dadurch **gekennzeichnet,** daß die Verbrennungskammer (3) so konstruiert ist, daß ihre Querschnitte rechtwinklig zur Mittelachse ($O_1$) kreisrund sind und die Bodenwand (4b) und die Innenwand (4a) über eine gekrümmte Fläche verbunden sind, die die Strömungsrichtung des Teils des Quetschspaltflusses ($V_1$) umkehrt, der längs der Seitenwand (4a) gerichtet ist, während die restliche Luft längs der Bodenwand (4b) zur Mittelachse ($O_1$) der Verbrennungskammer (3) geleitet wird, und daß die Kraftstoffeinspritzdüsenanordnung (15) Düsenöffnungen (5) zum Sprühen zerstäubten Kraftstoffs auf die innere Seitenwand (4a) hat, wobei die Kraftstoffstrahlen (f) die Verbrennungskammer (3) in fünf etwa gleiche Abschnitte unterteilen und im Bereich der Übergänge der verbindenden gekrümmten Flächen auf die Seitenwand (4a) gerichtet sind.

3. Verbrennungskammer nach Anspruch 1, bei der die Verbrennungskammer (103) so konstruiert ist, daß ihre Querschnitte rechtwinklig zur Mittelachse ($O_2$) quadratisch sind und die Bodenwand (104b) und die Innenwand (104a) über eine gekrümmte Fläche verbunden sind, die die Strömungsrichtung des Teils des Quetschspaltflusses ($V_2$) umkehrt, der längs der Seitenwand (104a) gerichtet ist, während die restliche Luft längs der Bodenwand (104b) zur Mittelachse ($O_2$) der Verbrennungskammer (103) geleitet wird, daß die beiden benachbarten Seitenwände (104a) miteinander über eine weitere gekrümmte Fläche verbunden sind, die darin eine Turbulenz (T) erzeugt, und daß die Kraftstoffeinspritzdüsenanordnung (15) Düsenöffnungen (5) hat, die den Kraftstoff zerstäuben und im Bereich der verbindenden gekrümmten Flächen (108) auf die Seitenwände (104a) richten, wobei die Verbrennungskammer (103) durch die Kraftstoffstrahlen (f) in etwa fünf Abschnitte unterteilt ist.

4. Verbrennungskammer nach einem der Ansprüche 1, 2 oder 3, bei der die Verbrennungskammer (3, 103) so konstruiert ist, daß sie die folgenden beiden Formeln erfüllt:

$0,45 \leq D/P_D \leq 0,65$, und
$0,6 \leq d/D \leq 0,8$

wobei $P_D$ der Durchmesser des Kolbens (1, 101), D der größte Abstand zwischen zwei einander gegenüberstehenden Seitenwänden (4a, 104a) und d der Abstand zwischen zwei einander gegenüberstehenden Seitenwänden (4a, 104a) an der Eintrittsöffnung (6, 106) der Verbrennungskammer (3, 103) ist.

FIG.1

FIG.2

FIG.3

FIG.4

FIG.6

FIG.7

FIG.8

FIG.5

FIG.9